# EUROPÄISCHE PATENTSCHRIFT

(11) **EP 0 948 234 B1**
(45) Veröffentlichungstag und Bekanntmachung des Hinweises auf die Patenterteilung: **25.10.2006**
(21) Anmeldenummer: 99104316.7
(22) Anmeldetag: 04.03.1999
(51) Int. Cl.: H04Q 11/04

(54) **ATM-Datennetzanalyse**
ATM data network analysis
Analyse de réseau de données ATM

(30) Priorität: 03.04.1998 DE 19815099
(43) Veröffentlichungstag der Anmeldung: 06.10.1999
(73) Patentinhaber: Deutsche Telekom AG, 53113 Bonn (DE)
(72) Erfinder: Sommer, Matthias, 64331 Weiterstadt (DE); Lechterbeck, Marc, 64295 Darmstadt (DE)

(56) Entgegenhaltungen:
- WO-A-98/06200
- US-A- 5 434 846

## Beschreibung

Die Erfindung betrifft ein Verfahren und eine Vorrichtung zur Datennetz-, insbesondere ATM-Analyse, nach dem Oberbegriff des Patentanspruchs 1.

Bei dem vom Telekommunikationsstandardisierungssektor ITU-T der International Telecommunication Union ITU für Breitbandnetze empfohlenen Übertragungsverfahren ATM (Asynchroner Übermittlungsmodus) werden die Daten in Blöcken fester Länge von 53 Byte, sogenannten Zellen, übertragen. Die meisten Anwendungen fassen eine gewisse Anzahl von Zellen auf höherer Ebene zu größeren Datenblöcken zusammen, um sie mit einem Fehlerschutz zu versehen. Der Fehlerschutz kann zum Beispiel eine zyklische Code-Fehlerüberprüfung CRC oder eine Vorwärtsfehlerkorrektur FEC sein.

Im ersten Fall wird beim Sender über eine gewisse Anzahl von Zellen eine Prüfsumme gebildet und zusätzlich zu den Daten zum Empfänger übermittelt. Der Empfänger ermittelt ebenfalls die Prüfsumme über den Datenblock und vergleicht das Ergebnis mit der übermittelten Prüfsumme. Im Falle einer Nichtübereinstimmung wird der gesamte Datenblock vom Sender nochmals angefordert und übertragen.

Das FEC-Verfahren erlaubt es dem Empfänger, eine gewisse Anzahl von ATM-Zellen in einem Datenblock zu korrigieren, ohne Daten erneut anfordern zu müssen. Bei Verwendung einer speziellen Codierung (Reed-Solomon) können zum Beispiel 4 Zellen in einem Block von 128 Zellen korrigiert werden. Dieses Verfahren eignet sich beispielsweise für zeitkritische Anwendungen wie Live-Video-Übertragung, bei der im Normalfall keine Zeit zum erneuten Anfordern von Daten bleibt.

Bei der Übertragung von Daten über das ATM-Weitverkehrsnetz läßt es sich nicht ausschließen, daß Bitfehler innerhalb von ATM-Zellen zu Zell- und damit Datenverlust führen. Speicherüberlauf in Vermittlungsknoten oder Verletzung des Verkehrsvertrags können ebenfalls zu Zellverlusten führen. Für die Qualität einer ATM-Verbindung ist beim Auftreten von mehr als einem Zellfehler (sogenanntes Fehlerbündel) bei derartigen blockorientierten Applikationen die Verteilung der Fehler auf die Datenblöcke von immenser Bedeutung. Sämtliche Fehler eines Fehlerbündels können innerhalb eines Datenblocks liegen; aber auch auf verschiedene Blöcke verteilt sein.

Um Überprüfen zu können, ob ein Verkehrsstrom den mit einem Netzbetreiber geschlossenen Verkehrsvertrag auch einhalten kann, müssen die Zellankunftszeiten ermittelt werden. Mit Hilfe dieser Werte und eines speziellen Algorithmus (GCRA - Generic-Cell-Rate-Algorithm) lassen sich nichtkonforme Zellen innerhalb des ATM-Stromes ermitteln. Diese nichtkonformen Zellen werden in einem ATM-Vermittlungsknoten verworfen.

Für die Ermittlung des Verkehrsprofils einer ATM-Verbindung ist die genaue Kenntnis der Verteilung der ATM-Zellen über die Zeit von Bedeutung. Je kleiner das Zeitintervall eines vorgegebenen Zeitrasters ist, in dem Zellen gezählt werden, desto genauer sind die Aussagen über das Profil.

Ein grundsätzlicher Artikel über Datennetz-Diagnose ist im Datakommunikator 21, Seiten 3 und 4, 1997, erschienen. Außerdem sind auf dem Markt verschiedene Meßgeräte verfügbar, wie zum Beispiel der ATM AX-200^{™} Multiport ATM Protocol Analyser der Firma Radcom, oder das ATM-Testgerät HP 75000. Weitere auf dem Markt befindliche Geräte sind der ATM Quality Analyser MP 1220A von Anrizo GmbH, Düsseldorf und die Tester ABT-20 von Wandel und Goldermann, die in "bits" 79, Seiten 16 und 17 und "bits" 78, Seiten 4 bis 6, beschrieben sind.

Diese auf dem Markt verfügbaren Meßgeräte sind lediglich in der Lage, Zellfehler in einem fest definierten, groben Zeitraster, nämlich mit einer maximalen Auflösung von ca. 1 Sekunde aufzuzeigen. Diese Geräte akkumulieren bei der Ermittlung des Verkehrsprofils die ankommenden Zellen auf der Basis von einer Sekunde. Die Charakteristik des Verkehrsprofils wird dadurch extrem unscharf.

Aus der US 5,434,846 ist ein Verfahren zum überwachen und/oder Testen eines Telekommunikationsnetzes zur Übertragung von Daten in Form von Zellen gemäß der ATM-Norm offenbart, wobei die Zellen einen Kopf umfassen, der es ermöglicht, die Benutzerzellen von Dienstzellen (F4, F5) zu unterscheiden, wobei beim Senden Steuer-Informationen erzeugt werden und in den gesendeten Benutzerzellen und/oder Dienstzellen übertragen werden. Das offenbarte Verfahren zeichnet sich dadurch aus, dass in einem Punkt (P) des Netzes (R) die übertragenen Zellen gelesen werden und eine Vorverarbeitung durchgeführt wird, die darin besteht, dass die gelesenen Zellen formatiert werden, und die zur Durchführung von Testoperationen nützlichen Zellen ausgewählt werden, wenigstens einen Teil der Steuerinformationen neu berechnet wird und die neu berechneten Steuerinformationen und die empfangenen Steuerinformationen in die Form von Mitteilungen gebracht werden, wobei die genannten Mitteilungen für eine spätere verarbeitung bestimmt sind, um insbesondere die Kohärenz zwischen den neu berechneten Steuerinformationen und den empfangenen Steuerinformationen zu überprüften.

Der Erfindung liegt die Aufgabe zugrunde, ein Verfahren und eine Vorrichtung zur ATM-Analyse zu schaffen, die es gestatten, über einen langen Zeitraum, wie zum Beispiel mehrere Tage, Wochen oder Monate, eine ATM-Verbindung zu überwachen und auftretende Zellverluste blockgenau zu protokollieren, wobei das Zeitraster so gestaltet werden soll, dass die Fehler detailliert auf Zellebene innerhalb von Zellblöcken festzustellen und aufzuzeichnen sind und wobei bei der Ermittlung der Charakteristik des Verkehrsprofils eine erheblich feinere Auflösung des Profils als bisher erreicht werden soll.

Die erfindungsgemäße Lösung für das Verfahren ist im kennzeichnenden Teil des Patentanspruchs 1 charakterssiert.

Die erfindungsgemäße Lösung für die Vorrichtung ist im kennzeichnenden Teil des Patentanspruchs 5 charakterisiert.

Weitere Ausgestaltungen bzw. Lösungen für das Verfahren sind in den Patentansprüchen 2 bis 4 angegeben und weitere Lösungen bzw. Ausgestaltungen für die Vorrichtung sind im kennzeichnenden Teil der Patentansprüche 6 bis 10 angegeben.

Die dem Verfahren zugrundeliegende Idee besteht darin, eine Zellfehleranalyse nicht innerhalb eines vorgegebenen Zeitrasters, sondern bezogen auf eine gewisse Anzahl von ATM-Zellen, sogenannten Zellblöcken, vorzunehmen.

Dazu wird das von einem Speicher ausgehende Signal eines ATM-Stromes mittels eines Signalsplitters von der ATM-Übertragungsstrecke abgezweigt und einem ATM-Analyse-Gerät über eine Schnittstelle zugeführt. In der genannten Vorrichtung wird der Zellstrom analysiert und vorverarbeitet. Die Ergebnisse werden anschließend mittels eines speziellen Protokolls auf einen Personal Computer übertragen und mit einer speziellen Software weiter tet, ausgewertet, am Bildschirm dargestellt und auf Festplatte gespeichert.

Durch das erfindungsgemäße Verfahren und die erfindungsgemäße Vorrichtung wird es jetzt möglich, eine ATM-Verbindung über einen langen Zeitraum, nämlich mehrere Tage, Wochen oder Monate zu überwachen und auftretende Zellverluste blockgenau zu protokollieren. Außerdem ist die Vorrichtung in der Lage, die Fehler detailliert auf Zellebene innerhalb von Zellblöcken bei einer Blockgröße von 8 bis 999 Zellen frei einstellbar zu detektieren und aufzuzeichnen.

Bei der Ermittlung des Verkehrsprofils wird durch ein Zeitraster von 500/zs, 250/is, 125/is und 62,5/Us eine erheblich feinere Auflösung des Profils als bisher ermöglicht.

Weitere Vorteile, Merkmale und Anwendungsmöglichkeiten der vorliegenden Erfindung, insbesondere die genauere Analyse der Fehler und das Erreichen einer wesentlich schärferen Charakteristik des Verkehrsprofils, ergeben sich aus der nachfolgenden Beschreibung in Verbindung mit den in der Zeichnung dargestellten Ausführungsbeispielen.

Die Erfindung wird im folgenden anhand von in der Zeichnung dargestellten Ausführungsbeispielen näher beschrieben. In der Beschreibung, in den Patentansprüchen, der Zusammenfassung und in der Zeichnung werden die in der hinten angeführten Liste der Bezugszeichen verwendeten Begriffe und zugeordneten Bezugszeichen verwendet.

In der Zeichnung bedeuten:
- Fig. 1: ein Prinzipschaltbild zur ATM-Fehleranalyse;
- Fig. 2: ein Blockschaltbild zur Erklärung der prinzipiellen Funktionsweise;
- Fig. 3: ein Prinzipschaltbild einer ATM-Analysekarte mit einem frei programmierbaren Gatearray;
- Fig. 4: ein Prinzipschaltbild eines frei programmierbaren Gatearrays und
- Fig. 5: eine Protokollstruktur von Speichern.

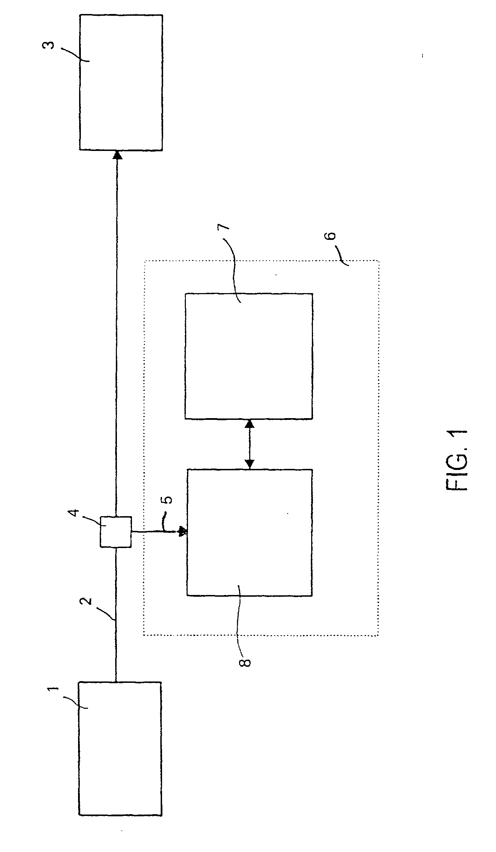

In Fig. 1 ist ein Sender 1 dargestellt, der über eine ATM-Übertragungsstrecke oder -verbindung 2 mit einem Empfänger 3 verbunden ist.

Ein ATM-Analysesystem 6, bestehend aus einer noch näher zu beschreibenden Hardware 8 und einer noch später detaillierter beschriebenen Software 7 ist über eine Leitung 5 und einen Signalsplitter 4 an die ATM-Übertragungsstrecke 2, die zu analysieren ist, angekoppelt.

Dabei wird der jeweilige Zellstrom in der Hardware 8 analysiert und vorverarbeitet. Die daraus folgenden Ergebnisse werden anschließend mittels eines speziellen Protokolls auf einen Personalcomputer übertragen und mit einer speziellen Software 7 weiter aufbereitet, ausgewertet, am Bildschirm dargestellt und auf Festplatte gespeichert.

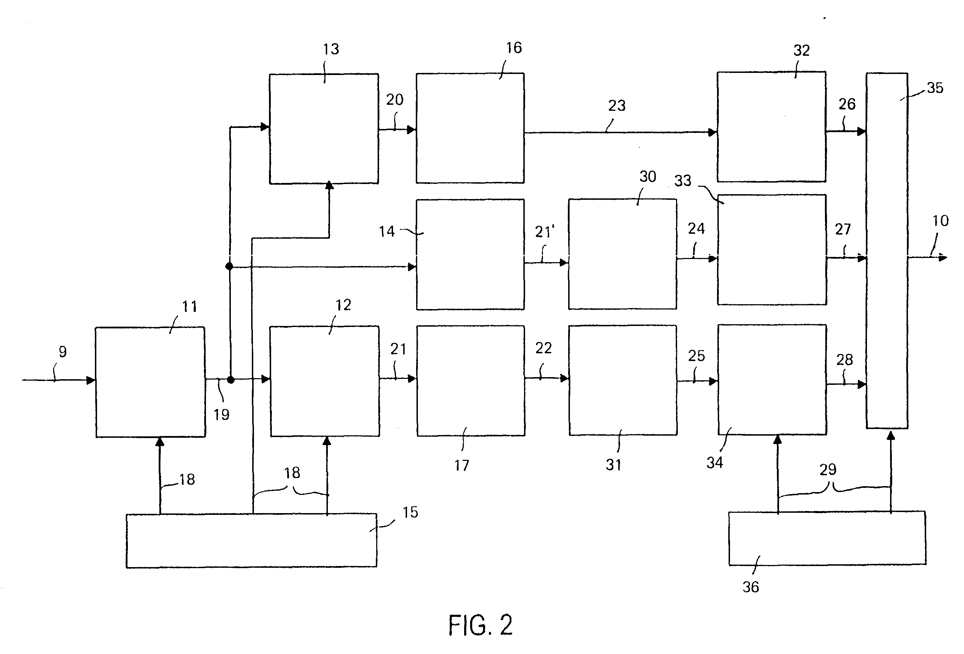

Anhand des in Fig. 2 dargestellten Blockschaltbildes wird nachfolgend das prinzipielle Analyseverfahren beschrieben. Auf den Eingang 9 eines Filters 11 wird der zu analysierende ATM-Zellenstrom gegeben. Das Gesamtergebnis der Analyse wird über den Ausgang 10 an einen Personalcomputer übertragen. Zunächst passiert der ATM-Zellenstrom den Filter 11, wobei die nicht relevanten Zellen herausgefiltert werden und nur die zu einer Verbindung gehörenden und zu untersuchenden Zellen weitergeleitet werden. Die Filterwerte lassen sich über die externe Einstellung 15, die über die Leitung 18 mit dem Filter 11 verbunden ist, einstellen.

Für die Fehleranalyse wird über einen Blocktrigger 12, der über eine Leitung 19 mit dem Ausgang des Filters 11 verbunden ist, der Anfang und das Ende eines Zellblockes festgestellt und die darin enthaltenen Zellfehler werden in einer Schaltung zur Fehleranalyse 17 ermittelt. Die Fehleranalyseschaltung 17 ist über eine Leitung 21 mit dem Ausgang des Blocktriggers 12 verbunden. Von der Fehleranalyseschaltung 17 wird die Information über eine Leitung 22 zu einem Protokoll-Bildner 31 weitergegeben, wo diese Informationen in ein Protokoll eingebettet werden und über eine Leitung 25 in einem Speicher 34 abgelegt werden.

Der Personalcomputer liest durch Senden spezieller PC Steuersignale 36, die über Verbindungen 29 sowohl auf den Speicher 34 als auch auf einen Multiplexer 35 wirken, den Speicher 34 über den Multiplexer 35 aus und verarbeitet die von der Hardware ermittelten Ergebnisse. Zur Ermittlung der Zwischenankunftszeiten wird mittels eines Zählers 14 der Zeitabstand zweier zu einer Verbindung gehörenden Zellen ermittelt, in ein Protokoll durch einen Protokoll-Bildner 30 eingebettet und in einem zweiten Speicher 33 abgelegt. Der Personalcomputer liest durch Senden spezieller Steuersignale 36 über die entsprechende Leitung 29 und einen Multiplexer 35 den Speicher aus und verarbeitet die von der Hardware ermittelten Ergebnisse.

Zur Ermittlung des Verkehrsprofils werden die zu einer Verbindung gehörenden Zellen innerhalb eines extern vorgesehenen Zeitrasters mittels eines Zählers 16, dem eine Schaltung für die Zeitbasis 13 vorgeschaltet ist, aufsummiert und die Zählerstände werden unstrukturiert über die Verbindung 23 direkt in einem Speicher 32 abgelegt. Jeder Wert wird dabei in einem Byte abgespeichert. Somit wird ein Protokoll-Overhead vermieden und Zeit- und Speicherbedarf eingespart. Es muß allerdings sichergestellt sein, daß ein Zählerstand den Wert 255 nicht überschreitet, da sonst die Werte im Speicher 32 vom Personalcomputer falsch interpretiert werden.

Bei einer bekannten STM1-Verbindung (155 Mbit/s) können pro Sekunde maximal rund 330000 Zellen auftreten. In dem größten wählbaren Zeitintervall von 500µs fallen demnach maximal 165 Zellen. Der einstellbare kleinste Werte von 62,5µs trägt dem Rechnung, da die maximalen Zählerstände auch bei einer STM4-Schnittstelle (622 Mbit/s) unter dem Wert von 255 bleiben.

Das hier beschriebene System ist auf ATM-Verbindungen ausgelegt, die die ATM-Adaption AAL1 benutzen. Derartige Verbindungen lassen sich über einen längeren Zeitraum bezüglich Zellfehler und Zellverluste überwachen.

Darüberhinaus ist das System in der Lage, über die Langzeitüberwachung hinaus Bitraten, Lage, CDVT-Analysen und Verkehrsprofile von AAL1- und AAL5-Verkehrsströmen zu liefern.

Die beschriebene Testvorrichtung weist folgende Eigenschaften auf:
- Erkennung und Aufzeichnung von Zellfehlern, wie zum Beispiel Zellverlusten und Zelleinfügungen (AAL1) über einen Zeitraum von mindestens 100 Tagen
- Ermittlung des Verkehrsprofils einer ATM-Verbindung
- Aufzeichnung und Darstellung der momentanen Bitrate der Verbindung
- Ermittlung, Aufzeichnung und Darstellung von Zellabständen (IAT-Histogramm) und
- CDVT-Analyse nach dem GCRA Algorithmus (Generic Cell Rate Algorithm).

Es soll hier erwähnt sein, daß die soeben beschriebene Vorrichtung in der Lage ist, zum Beispiel Fälle aufzudecken, in denen die bekannten Korrekturmechanismen der AAL1 unzureichend sind.

Gemäß Standard sind AAL1-Applikationen in der Lage, 4 Zellen innerhalb eines Blockes von 128 Zellen problemlos zu korrigieren, das heißt dieser Mechanismus versagt, wenn mehr als 4 Zellen innerhalb des Blocks verlorengehen. Wird die Blockgröße der vorliegenden Vorrichtung auf 128 in diesem Fall gestellt, so summiert und protokolliert diese Vorrichtung alle Fehler, die innerhalb von 128er Zellblöcken auftreten. Da die Blockgröße frei wählbar ist, können aber auch nicht standardkonforme Blockgrößen untersucht werden. Dies ist insbesondere interessant, wenn die AAL1-Verbindung speziell zur Untersuchung der Zellfehler-Struktur eingesetzt wird.

Über den gesamten Beobachtungszeitraum lassen sich darüberhinaus Aussagen über die Aktivität der Verbindung, zum Beispiel Zell- bzw. Bitrate und QoS (zum Beispiel Unterbrechungen der Leitung) machen. Je nach Nutzbitrate kann das Verkehrsprofil der Verbindung sowie die IAT-online aufgezeichnet werden. Die Länge des Beobachtungszeitraums ist nur von der Plattenkapazität des eingesetzten Personalcomputers abhängig.

Es soll hier erwähnt sein, daß das Prinzip des Gesamtsystems bzw. der beschriebenen Vorrichtung nicht auf die Überwachung und Profilerstellung von ATM-Verbindungen beschränkt ist, sondern auch auf andere Datenverbindungen, wie zum Beispiel LAN, ohne weiteres angewendet werden kann.

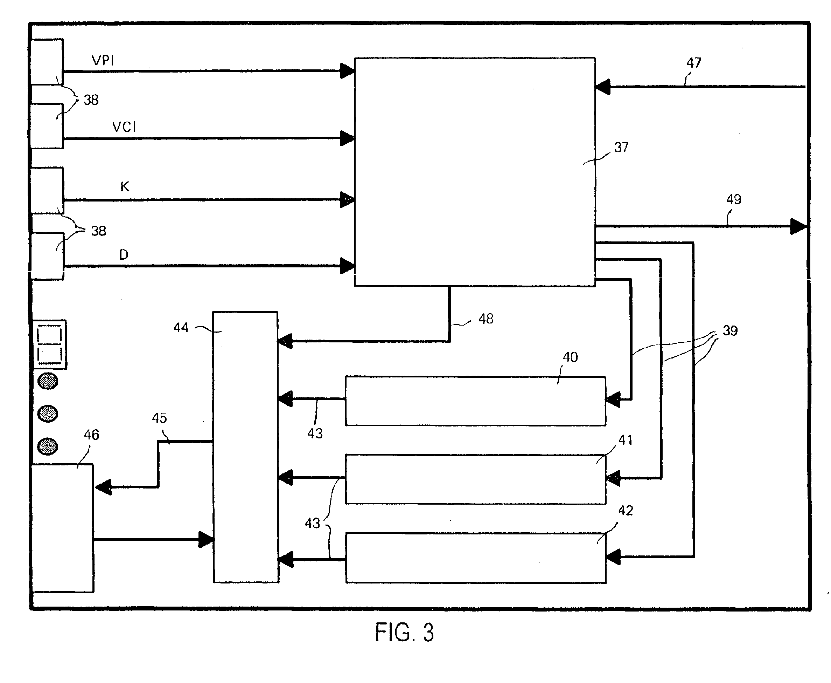

Fig. 3 zeigt das Prinzipschaltbild einer für die vorliegende Vorrichtung entwickelten ATM-Karte. Das wichtigste Teil bildet ein frei programmierbares Gatearray 37, wie bereits vorher erwähnt wurde. In dem Gatearray 37 sind sämtliche Funktionen und Operationen zur Auswertung des ATM-Zellenstroms vereint. Parameter wie Virtueller Pfad-Identifizierer VPI, Virtueller Kanal-Identifizierer VCI, Blockgröße K, Sample-Abstand D können über Drehschalter 38 eingestellt werden. Die Ergebnisse gelangen über die Verbindungen 39 in drei Speicherbausteine 40, 41 und 42 und werden dort über einen Multiplexer 44, der über Verbindungen 46 mit den Ausgängen der drei genannten Speicher 40 bis 42 verbunden ist und eine Verbindung 45 auf den Ausgang in Form einer Steckverbindung 46 der Karte gegeben. Der Personalcomputer selektiert über Steuerleitungen 47 und insbesondere 39 einen der drei Speicher 40 bis 42 und liest die Ergebnisdaten über eine parallele Schnittstelle aus. Softwaremodule übernehmen in einem Nachverarbeitungsprozeß die Auswertung der Daten. Das frei programmierbare Gatearray 37 ist außerdem direkt über eine Leitung 48 mit dem Multiplexer 44 und damit zum Ausgang 46 verbunden.

Zusätzlich stellt die Vorrichtung nach Fig. 3 eine Tonschnittstelle zur Verfügung. Bei jedem erkannten Zellfehler wird für eine Zeit von ca. 300ms ein 1000 Hz-Ton generiert. Dieses Signal kann auf einer zusätzlichen Tonspur eines Videorecorders parallel zum Bild aufgezeichnet werden. Dieses Verfahren einer akkustischen Fehleranzeige bildet die Grundlage für eine nachträgliche Beurteilung der Auswirkungen von Zellfehlern auf die Bildqualität. Das Signal wird auf der Leitung 49 bereitgestellt.

Die Software kann eine Windows-Applikation oder auch eine andere Software-Applikation sein. Die Transferroutinen können zum Beispiel in Assembler programmiert sein und greifen direkt unter Umgehung des BIOS auf den Parallel Port des Personalcomputers zu.

Die Software stellt die nachfolgend kurz beschriebenen Bildschirmanzeigen zur Verfügung. Das Hauptfenster besteht im wesentlichen aus der Langzeitbetrachter-Anzeige und zum Beispiel aus animierten Kontrolleuchten zum Anzeigen des Systemstatus.

Während sämtliche Fehlerereignisse detailliert mit Datum, Zeit, Blocknummer und anderen für die spätere off-line Nachbearbeitung erforderlichen Parameter in eine Ergebnisdatei auf Festplatte gespeichert werden, läßt die Langzeitbetrachter-Anzeige LTV einen groben Überblick über die Geschehnisse der zum Beispiel letzten 30 Tage bezüglich dieser Ereignisse zu.

Die Langzeitbetrachter-Anzeige LTV besteht aus dem Sekunden-, Minuten-, Stunden- und Tage-Display. Diese vier Grafikbereiche arbeiten wie eine Uhr mit Kalenderanzeige. Alle von der Hardeware registrierten Fehlerereignisse werden pro Sekunde addiert und über 60 Sekunden in der Sekundenanzeige dargestellt. Nach Ablauf einer Minute wird die Summe aller Fehler dieser Minute in die Minutenanzeige übertragen. Nach Ablauf von 60 Minuten erfolgt der Übertrag der Summe aller in dieser Stunde aufgetretenen Fehler in die Stundenanzeige. Ein zum Beispiel rot dargestelltes Feld in der Tage-Anzeige bedeutet, daß an diesem Tag mindestens ein Fehler aufgetreten ist; ein zum Beispiel grünes Feld bedeutet einen fehlerfreien Tag.

Während der Aufzeichnungsphase im Betrieb zeichnet der Langzeitbetrachter die Fehlerereignisse sequentiell auf. Der Zustand, zum Beispiel der Minutenanzeige zu einer gewissen Zeit, ist exakt einer bestimmten Stunde zugeordnet und stellt ausschließlich die Ereignisse dieser Stunde dar.

Im Auswertemodus lassen sich alle protokollierten Ereignisse auf einen Blick darstellen, indem der gesamte Aufzeichnungszeitraum durch Aufaddieren der Fehlerereignisse in die vier Grafikbereiche projiziert wird. Die Stunden-Anzeige, zum Beispiel in der Stunde sechs, zeigt die Summe aller in Stunde sechs auftretenden Fehler sämtlicher Tage an.

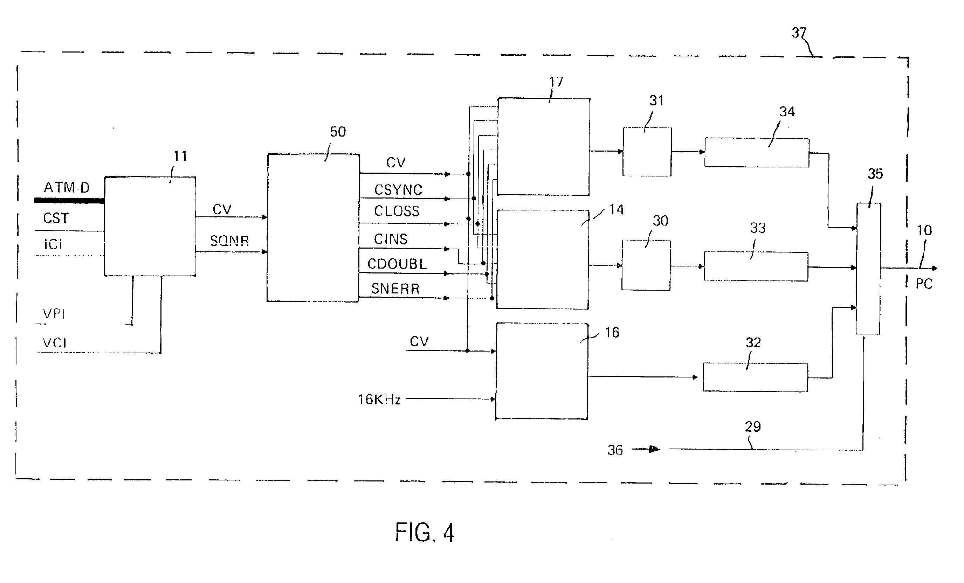

In Fig. 4 ist die Ansteuerung und der Aufbau des frei programierbaren Gatearrays 37 dargestellt. Es soll zunächst erwähnt sein, daß dieses Prinzipschaltbild große Ähnlichkeiten mit Fig. 2 aufweist, weshalb hier für die äquivalenten Bausteine die gleichen Bezugszeichen verwendet werden. Die einlaufenden Daten in ATM-Zellen ATM-D werden von einem Zellstart-Signal CST und einem Leerzellen-Indikator-Signal ICI begleitet, um den Anfang einer Zelle erkennen sowie zwischen Nutz- und Leerzelle unterscheiden zu können. In dem Filter 11 werden alle Zellen einer VPI/VCI-Überprüfung unterzogen, um die Zellen herauszufiltern, die zu der ausgewählten Verbindung gehören. Die Einstellung der VPI/VCI-Werte geschieht zum Beispiel über Drehschalter, die über die entsprechend bezeichneten Leitungen VPI bzw. VCI auf den Filter 11 gegeben werden.

Der Filter 1 liefert an Block 50 ein CV-Signal (gültige Zelle) für jede ATM Zelle der ausgewählten AAL1-Verbindung und die zu dieser Zelle gehörige Sequenznummern SQNR. In Block 50 erfolgt die Auswertung der Sequenznummern SQNR. Die Sequenznummer SQNR einer Zelle wird mit der vorherigen und der nachfolgenden Sequenznummer SQNR verglichen und daraus werden Schlüsse bezüglich Zellfehlern gezogen.

Die Ergebnisse von der Schaltung 55 werden in der Zellabstandsschaltung 14, in der Zellsummenschaltung 16 und in der Fehleranalyseschaltung 17 ausgewertet. Diesen Schaltungen werden dazu die auf den Ausgängen bzw. Leitungen der Schaltung 55 angegebenen Signale CV bis SNERR zugeführt. In den genannten Schaltungen 14, 16 und 17 erfolgt eine Auswertung, deren Ergebnisse über die Protokoll-Bildner-Module 30 und 31 in die Speicher 32 bis 34 geschrieben werden. Über den Multiplexer 35 gelangen die Speicherinhalte über eine parallele Schnittstelle zum Personalcomputer PC, wo sie angezeigt, weiterverarbeitet und gespeichert werden können. Im nachfolgenden werden detailliert die einzelnen Funktionen der Schaltung beschrieben.

### Zellfehler:

ATM-Zellen einer AAL1-Verbindung zeichnen sich dadurch aus, daß sie im ersten Byte des Zellrumpfes eine Sequenznummer SQNR im Bereich von 0 bis 7, das entspricht 3 Bit, tragen, die zusätzlich durch einen Fehlerschutz gesichert ist. Durch Analyse dieser Sequenznummern aufeinanderfolgender ATM-Zellen einer AAL1-Verbindung, die durch die Parameter VPI/VCI eindeutig spezifiziert ist, werden die Zellfehler dieser Verbindung ermittelt. Es können Zellverluste, Zellfehleinfügungen und Bitfehler innerhalb der Sequenznummer festgestellt werden. Diese Fehler werden für Blöcke von K ATM-Zellen akkumuliert. Der Parameter K kann im Bereich von 8 bis 255 eingestellt werden.

Die ermittelten Zellfehler werden im Protokoll-Bildner 31 in eine Protokollstruktur eingebettet und im Speicher 34 abgelegt. Jeder Zellblock der Größe K veranlaßt die Generierung eines Datensatzes im Speicher. Die Ergebnisse ermöglichen eine Schätzung der I.356-Leistungsparameter für Zellfehler durch die anschließende Nachverarbeitung mittels Software.

### Zeitintervall:

Zusätzlich zu den Zellfehlern werden die Abstände aufeinanderfolgender Zellen der ausgewählten Verbindung in der Zellabstandsschaltung 14 ermittelt, in einem Protokoll-Bildner 30 in eine Protokollstruktur eingebettet und im Speicher 33 abgelegt. Das Ermitteln des Zellabstandes erfolgt durch Auswerten der vom LIF generierten Signale ICI (Leerzellenindikator) und CST (Zellstart). Die so ermittelten Daten erlauben eine Schätzung der Zellankunftszeit IAT. Dieses Ergebnis wird für jede n-te Zelle berechnet, wobei n durch den Parameter D spezifiziert wird.

### Zellrate:

Die im Speicher 32 gespeicherten Ergebnisse geben die Anzahl von Zellen pro Zeitintervall an und damit eine Schätzung der augenblicklichen Zellrate. Die Ergebnisse können in Zeitintervallen von 500, 250, 125 und 62,5µs gespeichert werden. Um einen hohen Datendurchsatz zu erreichen bzw. zu gewährleisten, werden die Ergebnisdaten des Speichers 32 nicht in eine Protokollstruktur eingebettet, sondern jedes Ergebnis in nur einem Byte über den Multiplexer 35 und dessen Ausgang 10 zum Personalcomputer PC übertragen. Die Beschränkung auf 500µs als größtes Zeitintervall gewährleistet, daß bei einer die volle Bandbreite belegenden STM1-Verbindung (das heißt 155 Mbit/s) pro Zeitintervall der Zellenzähler unterhalb des Wertes von 255 bleibt. Somit genügt genau ein Byte zur Übertragung des Ergebnisses. Für eine STM4-Verbindung muß das Zeitintervall auf 62,5µs eingestellt werden, um den selben Effekt zu erreichen.

Die vom erfindungsgemäßen System bereitgestellten Ergebnisse basieren auf diskreten Zellereignissen und zeigen daher entweder die Anzahl der Ereignisse oder die Zellen an. Dadurch wird die Berechnung, die Verarbeitung und die Speicherung von Ergebnissen erleichtert.

### Multiplexfunktion:

Die Multiplexfunktion unterliegt der Softwaresteuerung vom Personalcomputer PC. Die Software entscheidet darüber, welcher Speicher 32 bis 34 ausgelesen wird. Je nach gewählter Ergebnisart wird eine Speicher-Statusinformation von der Software abgefragt.

Die Kommunikation zwischen der Schaltung 7 des Systems bzw. der Vorrichtung und dem Personalcomputer PC erfolgt über eine parallele Schnittstelle. Somit ist es möglich, jeden handelsüblichen Personalcomputer bzw. Laptop, der einen Druckeranschluß besitzt, zur Systemsteuerung und Datenauswertung einzusetzen, ohne spezielle Interfacekarten einsetzen und konfigurieren zu müssen.

### Speichermanagement:

Die Speicher 33 und 34 können parallel gelesen werden. In einigen Fällen können jedoch beim Speicher 33 Informationen verloren gehen. Der Speicher 32 kann nicht gelesen werden, wenn Speicher 33 und Speicher 34 aktiviert sind.

Je nach Betriebsart können die einzelnen Speicher deaktiviert werden. Wenn das hier beschriebene System bzw. die Vorrichtung für die Fehlererkennung eingesetzt wird, sind die Echtzeitfehler am wichtigsten und Speicher 34 erhält damit die höchste Priorität. Wenn die Ermittlung der Toleranz der Zellverzögerungsschwankung CDVT gemäß des generischen Zellratenalgorithmus GCRA im Vordergrund steht, hat Speicher 33 höchste Priorität und Speicher 34 kann abgeschaltet werden. Wenn Informationen über die Zellrate zur Ermittlung des Verkehrsprofils erforderlich sind, wird Speicher 32 gelesen und Speicher 33 und 34 werden deaktiviert.

### Software:

Die Software besteht aus ca. 35 Pascal-Units. Die Assembler-Routinen für Kommunikationsaufgaben, die die Daten und Statusports lesen und steuern, sind im Delphi-Code eingebettet und nehmen direkten Zugriff auf die Hardware.

Bei den PC Anforderungen handelt es sich um Standardanforderungen, wie zum Beispiel einen 486er Intel-Prozessor mit 66 Mhz und 8 Mbyte. Als Software wird Borland-Delphi 1,0 mit Windows 95 verwendet, aber die Anwendung läuft ebenfalls unter Windows 3.1. Es können selbstverständlich auch andere Softwarelösungen entsprechend entwickelt und angewendet werden, ohne die Prinzipien der hier vorgestellten ATM-Analyse und damit den Erfindungsgegenstand zu verlassen.

### Protokollstruktur:

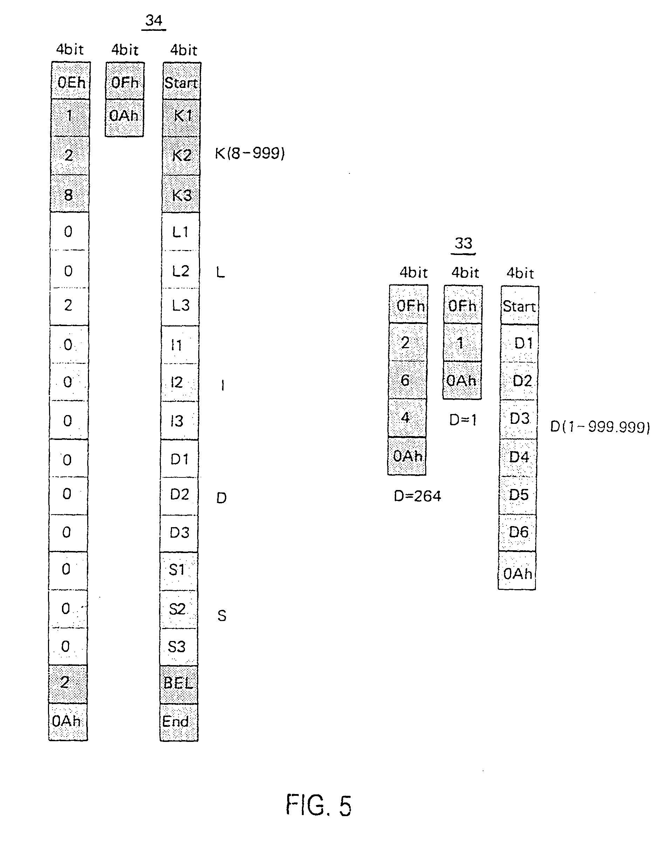

Die Ergebnisübertragung vom Speicher 34 und Speicher 33 zum Personalcomputer PC erfolgt in strukturierter Form, wobei die Ergebnisse in BCD-Format codiert sind. Die Datenbusbreite beträgt 4 Bit. Die Ergebnisse im Speicher 32 liegen in unstrukturierter binärer Form vor, wobei die Datenbusbreite 8 Bit beträgt. Die Protokollstrukturen der ersten beiden Speicher sind in Fig. 5 dargestellt. Die linken drei Kolonnen in der Fig. 5 zeigen den Zustand des Speichers 34 wobei die erste Kolonne 1:2 Zellverluste, die zweite Kolonne keine Fehler und die dritte Kolonne den Zustand bei Zellfehler(n) zeigt. Die 4 Bit einer jeden Kolonne erlauben BCD codierte Dezimalzahlen und ein Startflag OFh keine Fehler und ein Startflag < > OFh bedeuten Fehler oder eine K-Wertänderung. Die Blockgröße K ist hier 128. Der Speicher 33 speichert die Zellabstände. Es werden auch hier wieder BCD-codierte Dezimalzahlen verwendet. Startflag OFh bedeutet gültiger Zellabstand und Startflag < > OFh bedeutet nicht spezifizierter Zellfehler zwischen zwei gültigen Zellen oder Probenabstand (D-Wert)-Änderung; der Zellabstand D (1.999.999) variable Datensatzlänge, führende Nullen werden unterdrückt. Es wird ein Beispiel mit D = 264 in der linken Kolonne und D = 1 in der mittleren Kolonne angegeben.

Das Beispielformat in Fig. 5 gilt für den Fehlerfall "2 Zellfehler". Der Beginn eines Protokollrahmens für eine Fehlerermittlung ist auf 0EH festgelegt. Es folgen drei BCD-Ziffern K1 bis K3, die den eingestellten K Wert anzeigen, zum Beispiel 1-2-8. Es folgen je drei Stellen für die Zählerwerte Zellverlust L1 bis L3, Zellfehleinfügung I1 bis I3, Zellverdoppelung D1 bis D3 und Anzahl Zellen mit Fehler in der Sequenznummer S1 bis S3. Die nächste BCD-Stelle BEL bedeutet die Fehlerbündellänge und gibt die Anzahl der unmittelbar aufeinander fehlerhaften ATM-Zellen wieder. Das Ende des Prctokollrahmens ist mit OAh gekennzeichnet.

Wird ein fehlerfreier ATM-Zellenblock detektiert, beschränkt sich der Datensatz auf Startflag OFh und Endeflag OAh gemäß zweiter Kolonne. Mit dieser Methode wird erheblich Speicherplatz im Speicher sowie Übertragungskapazität zum Personalcomputer PC eingespart.

In einer nächsten Version des Systems sollen nur noch dann Datensätze erzeugt und zum Personalcomputer PC übertragen werden, wenn ATM-Zellfehler auftreten. Das hat allerdings zur Konsequenz, daß hardwareseitig ein Blockzähler implementiert werden muß, dessen Stand beim Auftreten von Zellfehlern im Protokoll mit übertragen werden muß. Nur so ist gewährleistet, daß der exakte Zeitpunkt des Auftretens eines Zellfehlers später rekonstruiert werden kann.

Der Speicher 33 übermittelt Informationen über die Zellabstände einer ATM-Verbindung. Die Zellabstände werden in Datensätzen variabler Länge im Speicher abgelegt und zum Personalcomputer PC übertragen. Am Anfang und Ende eines Datensatzes und damit einzelne Abstandswerte bei der Auswertung unterscheiden zu können, wird jede BCD-Ziffernfolge von einem Startflag OFh und am Ende von einem Endeflag OAh umrahmt.

### Liste der Bezugszeichen

- 1: Sender
- 2: ATM-Übertragungsstrecke
- 3: Empfänger
- 5: Leitung
- 6: System bzw. Vorrichtung zur ATM-Fehleranalyse
- 7: Schaltung bzw. Hardware der Vorrichtung
- 8: Software der Vorrichtung bzw. des Systems
- 9: Eingang (für ATM-Zellen)
- 10: Ausgang (zum PC)
- 11: Filter
- 12: Blocktrigger
- 13: Schaltung für die Zeitbasis
- 14: Schaltung für den Zellabstand
- 15: Externe Einstellungen (Schalter)
- 16: Schaltung zur Zellsummenbildung
- 17: Schaltung zur Fehleranalyse
- 18-29: Leitungen, Verbindungen oder Verbindungsleitungen
- 30,31: Protokollbildnder
- 32-34: Speicher
- 35: Multiplexer
- 36: PC-Steuersignale
- 37: Frei programmierbares Gatearray
- 38: Eingänge bzw. Leitungen für Parameter VPI, VCI usw.
- 39: Leitungen
- 40: Speicher für Zellfehler
- 41: Speicher für Zellabstände
- 42: Speicher für Zellen pro Zeiteinheit
- 43: Leitungen
- 44: Multiplexer
- 45: Leitung bzw. Verbindung
- 46: Steckverbindung oder Ausgang
- 47: Leitung für ATM-Zellen (8 Bit-Daten + CLK + CST + ICI
- 48: Leitung für Einstellungen
- 49: Audio- bzw. Tonschnittstelle
- 50: Prüfschaltung für Sequenznummer
- AAL: ATM Anpassungseinheit
- ATM: Asynchroner Übermittlungsmodus
- ATM-D: ATM Daten
- BCD: Binär codierte Dezimalzahl
- BEL: Fehlerbündellänge
- CDOUBL: Zellverdoppelung
- CDVT: Toleranz der Zellverzögerungsschwankung
- CINS: Zelleinfügung
- CLK: Takt
- CLOSS: Zellverlust
- CPT: Zellen pro Zeiteinheit
- CRC: Zyklische Code Fehlerüberprüfung
- CST: Zellstart
- CSYNC: Zellsynchronisation
- CV: Gültige Zelle
- D: Protokollparameter: Zellverdoppelung
- FEC: Vorwärtsfehlerkorrektur
- FPGA: Frei programmierbares Gatearray
- GCRA: Generischer Zellraten Algorithmus
- I: Protokollparameter: Zelleinfügung
- ICI: Leerzellen-Indikator-Signal
- ITU: Internationale Telekommunikationsvereinigung
- K: Zellblockgröße
- L: Protokollparameter: Zellverlust
- LTV: Langzeitbetrachter-Anzeige
- MUX: Multiplexer
- PC: Personalcomputer
- PB: Protokoll-Bildner
- S: Protokollparameter: Fehler in der Sequenznummer
- SNERR: Fehler in der Sequenznummer
- SQNR: Sequenznummer
- STM: Synchrones Transportmodul
- VCI: Virtueller Kanal-Indentifizierer
- VPI: Virtueller Pfad-Identifizierer

## Patentansprüche

1. Verfahren zur Datennetzanalyse, insbesondere zur ATM-Analyse für die Ermittlung und Langzeitaufzeichnung von ATM-Zellfehlerstrukturen und zwecks Analyse eines ATM-Zellenverkehrsstromes in ATM-Weitverkehrsnetzen, wobei ein von einem Sender (1) ausgehender ATM-Zellenstrom mittels eines Signalsplitters (4) von einer ATM-Verbindung (2) abgezweigt und einem System (6) zugeführt wird, und der Zellenstrom in diesem System (6) analysiert und vorverarbeitet wird, und die Ergebnisse anschließend mittels eine speziellen Protokolls über Protokoll-Bildner (30, 31) und Speicher (32 bis 34) gesteuert und auf einen Personalcomputer (PC) übertragen werden, und die übertragenen Ergebnisse im Personalcomputer (PC) mit Hilfe einer Software (8) weiter aufbereitet, ausgewertet, dargestellt und auf Festplatte gespeichert werden, **dadurch gekennzeichnet, dass** eine Zellfehleranalyse bezogen auf eine bestimmte Anzahl von ATM-Zellen, sogenannten Zellblöcken, vorgenommen wird, wobei für die Fehleranalyse über einen Blocktrigger (12) der Anfang und das Ende eines Zellblocks festgestellt wird und die darin enthaltenen Zellfehler in einer Fehleranalyseschaltung (17) ermittelt werden und die sich daraus ergebenden Informationen in ein Protokoll eingebettet und in einem ersten Speicher (34) abgespeichert werden,
dass mittels einer Zellenabstandsschaltung (14) der Zeitabstand zweier zu der ATM-Verbindung (2) gehörenden Zellen zur Ermittlung von Zwischenankunftszeiten ermittelt wird und das Ergebnis in ein Protokoll eingebettet und in einem zweiten Speicher (33) abgelegt wird,
dass zur Ermittlung eines Verkehrsprofils die zu der ATM-Verbindung (12) gehörenden Zellen innerhalb eines extern vergebbaren Zeitrasters mittels einer Zellsummenschaltung (16) aufsummiert werden und die Zählerstände unstrukturiert in einen dritten Speicher (32) abgespeichert werden,
dass von dem Personalcomputer (PC) durch Senden spezieller Steuersignale (36) die Speicher (32, 33, 34) über einen Multiplexer (35) ausgelesen und weiterverarbeitet werden.

2. Verfahren nach Patentanspruch 1, **dadurch gekennzeichnet, dass** der ATM-Zellenstrom zunächst einen Filter (11) passiert, dass in diesem Filter die nicht relevanten Zellen herausgefiltert werden und dass die zu einer ATM-Übertragungsstrecke oder - Verbindung gehörenden und zu analysierenden Zellen weitergereicht werden.

3. Verfahren nach Patentanspruch 1 und 2, **dadurch gekennzeichnet, dass** die Filterwerte extern einstellbar sind und dass die Fehler detailliert auf Zellebene innerhalb von Zellblöcken, wobei die Blockgröße frei einstellbar ist, detektiert und aufgezeichnet werden.

4. Verfahren nach einem der Patentansprüche 1 bis 3, **dadurch gekennzeichnet, dass** bei der Ermittlung des Verkehrsprofils ein Zeitraster im µsec-Bereich zu einer feinen Auflösung des Profils einstellbar ist.

5. Vorrichtung zur Durchführung des Verfahrens nach einem oder mehreren der Patentansprüche 1 bis 4, **dadurch gekennzeichnet, dass** auf der ATM-Verbindung bzw. -Übertragungsstrecke (2) zwischen einem Sender (1) und einem Empfänger (3) ein Signalsplitterschaltkreis (4) angeordnet ist, der über eine Leitung mit dem System zur ATM-Analyse (6), bestehend aus einer Hardware (7) und einer auswertenden und steuernden Software (8), verbunden ist.

6. Vorrichtung nach Patentanspruch 5, **dadurch gekennzeichnet, dass** der Hardwareteil (7) aus einem extern einstellbaren Filter (11) mit einem Eingang (9) für die ATM-Zellen, einem nachgeschalteten einstellbaren Blocktrigger (12) und einem Zeitbasisschaltkreis (13) sowie einer Zellabstandsschaltung (14) besteht, dass der Zeitbasisschaltung (13) eine Zellsummenschaltung (16) nachgeschaltet ist, die direkt mit einem Speicher (32) verbunden ist, dass die Zellabstandsschaltung (14) zum Einbetten der Auswertergebnisse in ein Protokoll mit einem Protokoll-Bildner (30) verbunden ist, der seinerseits mit einem Speicher (33) zum Abspeichern seiner Ergebnisse verbunden ist, dass die Fehlexanalyseschaltung (17) ebenfalls mit einem Protokoll-Bildner (31) verbunden ist, der seine Ergebnisse in einem nachgeschalteten Speicher (34) abspeichert und dass die beiden letztgenannten Speicher (33 bis 34) ert durch Steuersignale (36) von einem mit einer Auswertsoftware versehenen Personalcomputer (PC) über einen Multiplexer (35) und dessen Ausgang (10) auslesbar verbunden sind.

7. Vorrichtung nach dem Oberbegriff des Patentanspruchs 5, **dadurch gekennzeichnet, dass** zur Auswertung der ATM-Zellen ein frei programmierbares Gatearray (37) angeordnet ist, das alle Funktionen zur Auswertung des ATM-Zellenstromes enthält, dass Parameter VPI, VCI, Blockgröße K, Sample-Abstand D extern einstellbar ausgeführt sind und dass die Ausgänge des Arrays (37) über Leitungen (39) mit einem Zellfehlerspeicher (40), einem Zellabständespeicher (41) und einem Zellen pro Zeit-Speicher (42) verbunden sind, deren Ausgänge über Leitungen (43) mit einem Multiplexer (44) verbunden sind, der über eine Leitung (48) Einstellwerte zugeleitet bekommt, dessen Ausgang den Kartenausgang (46) bildet, während der karteneingang von einer Leitung (47) gebildet wird, die die zu analysierenden ATM-Zellen führt.

8. Vorrichtung nach Patentanspruch 7, **dadurch gekennzeichnet, dass** ein zusätzlicher Ausgang (49) vom frei programmierbaren Gatearray (37) eine Audioschnittstelle bildet, auf der für eine bestimmte Zeit ein 1 kHz Ton generierbar ist, der auf einer zusätzlichen Tonspur eines Videorecorders parallel zum Bild aufzeichenbar ist.

9. Vorrichtung nach einem der Patentansprüche 5 bis 8, **dadurch gekennzeichnet, dass** zwischen dem Filter (11) und der Zellfehlerschaltung (17), der Zellabstandschaltung (14) und der Zellsummenschaltung (16) ein Schaltungsblock (50) zur Auswertung der Sequenznummern (SQNR) und zum Vergleich der Sequenznummer einer Zelle mit der vorherigen und der nachfolgenden Sequenznummer zur Feststellung der Art von Zellfehlern angeordnet ist.

10. Vorrichtung nach Patentanspruch 9, **dadurch gekennzeichnet, dass** nur die Ausgänge der Schaltung (17) für die Zellfehler und der Schaltung (14) für den Zellabstand mit je einem Protokoll-Bildner (31 bzw. 30) verbunden sind, während die Schaltung für die Zellsummenbildung direkt mit einem Speicher (32) verbunden ist.

## Claims

1. Method for data network analysis, in particular for ATM analysis for determination and long-term recording of ATM cell error structures and for the purpose of analyzing an ATM cell traffic stream in ATM wide area networks, wherein an ATM cell stream originating from a transmitter (1) is diverted from an ATM connection (2) and delivered to a system (6) by means of a signal splitter (4), and the cell stream is analyzed and preprocessed in this system (6), and the results are then controlled by protocol generators (30, 31) and memory (32 through 34) by means of a special protocol and transferred to a personal computer (PC), and the transferred results are further prepared, evaluated, displayed, and stored on hard disk in the personal computer (PC) with the aid of a piece of software (8), **characterized in that** a cell error analysis is performed with respect to a specific number of ATM cells, known as cell blocks, wherein the beginning and end of a cell block for the error analysis are determined through a block trigger (12) and the cell errors contained therein are determined in an error analysis circuit (17) and the information resulting therefrom is embedded in a protocol and stored in a first memory (34),
**in that**, by means of a cell spacing circuit (14), the time separation of two cells belonging to the ATM connection (2) is determined in order to determine intermediate arrival times, and the result is embedded in a protocol and stored in a second memory (33),
**in that**, in order to determine a traffic profile, the cells belonging to the ATM connection (12) are summed by means of a cell summation circuit (16) over an externally specifiable time pattern, and the counter states are stored in a third memory (32) in unstructured form,
**in that** the memories (32, 33, 34) are read out and further processed by the personal computer (PC) through a multiplexer (35) by the transmission of special control signals (36).

2. Method according to claim 1, **characterized in that** the ATM cell stream first passes through a filter (11), **in that** the irrelevant cells are filtered out in this filter, and **in that** the cells that belong to an ATM transmission path or connection and are to be analyzed are passed on.

3. Method according to claims 1 and 2, **characterized in that** the filter values can be set externally and **in that** the errors can be detected and recorded in detail at the cell level within cell blocks, wherein the block size can be freely set.

4. Method according to any one of claims 1 through 3, **characterized in that** in determining the traffic profile, a time pattern in the µsec range can be set for fine resolution of the profile.

5. Apparatus for carrying out the method according to one or more of claims 1 through 4, **characterized in that** a signal splitter circuit (4) is arranged on the ATM connection or transmission path (2) between a transmitter (1) and a receiver (3), said signal splitter circuit being connected by a line to the system for ATM analysis (6) consisting of a piece of hardware (7) and a piece of analyzing and controlling software (8).

6. Apparatus according to claim 5, **characterized in that** the hardware component (7) comprises an externally settable filter (11) having an input (9) for the ATM cells, a subsequent configurable block trigger (12), and a timebase circuit (13) and a cell spacing circuit (14), **in that** the timebase circuit (13) is followed by a cell summation circuit (16) that is directly connected to a memory (32), **in that**, in order to embed the analysis results in a protocol, the cell spacing circuit (14) is connected to a protocol generator (30) that in turn is connected to a memory (33) for storing its results, **in that** the error analysis circuit (17) is likewise connected to a protocol generator (31) that stores its results in a subsequent memory (34), and
**in that** the latter two memories (33 through 34) are connected so as to be readable through a multiplexer (35) and its output (10) by means of control signals (36) from a personal computer (PC) provided with a piece of analysis software.

7. Apparatus according to the preamble of claim 5, **characterized in that** a freely programmable gate array (37) is provided for analysis of the ATM cells, said gate array containing all functions for analysis of the ATM cell stream, **in that** parameters VPI, VCI, block size K, sample spacing D are embodied to be externally settable, and **in that** the outputs of the array (37) are connected through lines (39) to a cell error memory (40), a cell spacing memory (41) and a cells-per-time memory (42), the outputs of said memories being connected through lines (43) to a multiplexer (44) that receives settings through a line (48) and whose output forms the card output (46), while the card input is formed by a line (47) that leads to the ATM cells to be analyzed.

8. Apparatus according to claim 7, **characterized in that** an additional output (49) from the freely programmable gate array (37) constitutes an audio interface on which it is possible to generate for a specific time a 1 KHz tone that can be recorded on an additional audio track of a video recorder parallel to the image.

9. Apparatus according to any one of claims 5 through 8, **characterized in that** circuit block (50) for analyzing the sequence numbers (SQNR) and for comparing the sequence number of a cell with the preceding and following sequence number to determine the type of cell errors is provided between the filter (11) and the cell error circuit (17), the cell spacing circuit (14) and the cell summation circuit (16).

10. Apparatus according to claim 9, **characterized in that** only the outputs of the circuit (17) for the cell error and the circuit (14) for the cell spacing are each connected to a respective protocol generator (31 or 30), while the circuit for generating cell summation is connected directly to a memory (32).

## Revendications

1. Procédé d'analyse de réseau de données, notamment d'analyse ATM pour la détermination et l'enregistrement à long terme de structures d'erreurs de cellules ATM et pour l'analyse d'un flux de trafic de cellules ATM dans des réseaux étendus ATM, un flux de cellules ATM provenant d'un émetteur (1) étant dévié d'une liaison ATM (2) moyennant un séparateur de signaux (4) et acheminé vers un système (6) et le flux de cellules étant analysé et prétraité dans ledit système (6), et les résultats étant ensuite commandés moyennant un protocole spécial par l'intermédiaire de générateurs de protocole (30, 31) et de mémoires (32 à 34) et transmis à un ordinateur personnel (PC), et les résultats transmis étant traités, évalués, représentés et enregistrés sur disque dur dans l'ordinateur personnel (PC) à l'aide d'un logiciel (8), **caractérisé en ce qu'**on procède à une analyse d'erreurs de cellules rapportée à un nombre donné de cellules ATM, dites blocs de cellules, le début et la fin d'un bloc de cellules étant repérés par l'intermédiaire d'un déclencheur de bloc (12) pour l'analyse d'erreurs et les erreurs de cellules contenues dans ledit bloc étant déterminées dans un circuit d'analyse d'erreurs (17) et les informations qui en résultent étant incluses dans un protocole et enregistrées dans une première mémoire (34),
l'intervalle de temps entre deux cellules appartenant à la liaison ATM (2) est déterminé au moyen d'un circuit d'intervalle entre cellules (14) pour déterminer des temps d'arrivée intermédiaires et le résultat est inclus dans un protocole et stocké dans une deuxième mémoire (33),
pour la détermination d'un profil de trafic, les cellules appartenant à la liaison ATM (12) à l'intérieur d'une trame de temps attribuable de manière externe sont totalisées moyennant un circuit totalisateur de cellules (16) et les consommations de compteur sont enregistrés de façon non structurée dans une troisième mémoire (32),
l'ordinateur personnel (PC) lit et traite les mémoires (32, 33, 34) par l'intermédiaire d'un multiplexeur (35) en envoyant des signaux de commande (36) spéciaux.

2. Procédé selon la revendication 1, **caractérisé en ce que** le flux de cellules ATM passe d'abord par un filtre (11), **en ce que** les cellules négligeables sont retenues dans ledit filtre et **en ce que** les cellules appartenant à un trajet de transmission ou à une liaison ATM et à analyser sont commutées.

3. Procédé selon les revendications 1 et 2, **caractérisé en ce que** les valeurs de filtre sont réglables de manière externe et les erreurs sont détectées et enregistrées de manière détaillée au niveau de la cellule à l'intérieur de blocs de cellules, la taille des blocs étant librement réglable.

4. Procédé selon l'une des revendications 1 à 3, **caractérisé en ce que**, lors de la détermination du profil de trafic, une trame de temps dans le domaine des microsecondes est réglable pour une résolution fine du profil.

5. Dispositif pour la mise en oeuvre du procédé selon une ou plusieurs des revendications 1 à 4, **caractérisé en ce qu'**un circuit de séparation des signaux (4) est disposé entre un émetteur (1) et un récepteur (3) sur la liaison ou le trajet de transmission ATM (2) et relié au système d'analyse ATM (6), composé d'un matériel (7) et d'un logiciel (8) pour l'évaluation et la commande par l'intermédiaire d'une ligne.

6. Dispositif selon la revendication 5, **caractérisé en ce que** la partie matérielle (7) se compose d'un filtre (11) réglable de manière externe et comportant une entrée (9) destinée aux cellules ATM, d'un déclencheur de bloc (12) réglable disposé en aval et d'un circuit de base de temps (13) ainsi que d'un circuit d'intervalle entre cellules (14), un circuit totalisateur de cellules (16), directement relié à une mémoire (32), est disposé en aval du circuit de base de temps (13), le circuit d'intervalle entre cellules (14) est relié à un générateur de protocole (30) pour inclure les résultats d'évaluation dans un protocole, ledit générateur de protocole étant relié pour sa part à une mémoire (33) pour enregistrer ses résultats, le circuit d'analyse d'erreur (17) est également relié à un générateur de protocole (31) qui enregistre ses résultats dans une mémoire (34) disposée en aval et les deux dernières mémoires (33 à 34) sont reliées de manière lisible, commandées par des signaux de commande (36) d'un ordinateur personnel (PC) doté d'un logiciel d'évaluation par l'intermédiaire d'un multiplexeur (35) et de sa sortie (10).

7. Dispositif selon le préambule de la revendication 5, **caractérisé en ce qu'**un circuit prédiffusé (37) librement programmable contenant toutes les fonctions pour l'évaluation du flux de cellules ATM est disposé pour l'évaluation des cellules ATM, des paramètres VPI, VCI, taille de bloc K, intervalle d'échantillon D sont réalisés réglables de manière externe et les sorties du circuit (37) sont reliées, par l'intermédiaire de lignes (39), à une mémoire d'erreurs de cellules (40), à une mémoire d'intervalles entre cellules (41) et à une mémoire cellules par unité de temps (42) dont les sorties sont reliées, par l'intermédiaire de lignes (43), à un multiplexeur (44) qui reçoit des valeurs de réglage par l'intermédiaire d'une ligne (48) et dont la sortie constitue la sortie de carte (46), tandis que l'entrée de carte est constituée par une ligne (47) qui transporte les cellules ATM à analyser.

8. Dispositif selon la revendication 7, **caractérisé en ce qu'**une sortie (49) supplémentaire du circuit prédiffusé (37) librement programmable constitue une interface audio sur laquelle peut être généré, pour un temps donné, un son de 1 kHz enregistrable sur une piste audio supplémentaire d'un magnétoscope parallèlement à l'image.

9. Dispositif selon l'une des revendications 5 à 8, **caractérisé en ce que**, entre le filtre (11) et le circuit d'erreurs de cellules (17), le circuit d'intervalle entre cellules (14) et le circuit totalisateur de cellules (16) est disposé un bloc de circuit (50) pour évaluer les numéros de séquence (SQNR) et pour comparer le numéro de séquence d'une cellule avec le numéro de séquence précédent et suivant pour déterminer le type d'erreurs de cellules.

10. Dispositif selon la revendication 9, **caractérisé en ce que** seules les sorties du circuit (17) pour les erreurs de cellules et du circuit (14) pour l'intervalle entre cellules sont reliées chacune à un générateur de protocole (31 / 30), tandis que le circuit pour la totalisation des cellules est directement relié à une mémoire (32).
